# EUROPÄISCHE PATENTSCHRIFT

(11) **EP 3 162 654 B1**
(45) Veröffentlichungstag und Bekanntmachung des Hinweises auf die Patenterteilung: **19.09.2018**
(21) Anmeldenummer: 16190381.0
(22) Anmeldetag: 23.09.2016
(51) Int. Cl.: B62D 1/04, B62D 1/06

(54) **LENKER EINES EINEN FAHRERARBEITSPLATZ AUFWEISENDEN FLURFÖRDERZEUGS**
STEERING WHEEL OF A INDUSTRIAL TRUCK COMPRISING A DRIVER WORKPLACE
VOLANT POUR CHARIOT DE MANUTENTION DOTÉ D'UN POSTE DE CONDUCTEUR

(30) Priorität: 26.10.2015 DE 102015013806; 04.11.2015 DE 102015118936
(43) Veröffentlichungstag der Anmeldung: 03.05.2017
(73) Patentinhaber: OM Carrelli Elevatori S.p.A., 20020 Lainate (MI) (IT)
(72) Erfinder: Mariotti, Fabio, 42016 Guastalla (IT); Kretschmer, Steffen, 63868 Grosswallstadt (DE); Castagnoli, Fabrizio, 46029 Suzzara - Mantova (IT)
(74) Vertreter: Patentship Patentanwaltsgesellschaft mbH

(56) Entgegenhaltungen:
- EP-A1- 2 383 164
- EP-A2- 0 911 750
- EP-B1- 1 155 939
- DE-A1-102006 016 163
- US-A1- 2003 230 161
- US-A1- 2005 046 279

## Beschreibung

Die Erfindung betrifft einen Lenker eines einen Fahrerarbeitsplatz, insbesondere Fahrerstand, aufweisenden Flurförderzeugs, wobei der Lenker als Lenkrad ausgebildet ist, das einen Lenkkranz aufweist, und um eine Drehachse drehbar angeordnet ist, wobei der Lenkkranz einen linken Griffabschnitt, einen rechten Griffabschnitt und einen zwischen den beiden Griffabschnitten angeordneten Mittelgriffabschnitt aufweist, wobei ein linkes Bedienelement eines Fahrgebers zur Steuerung des Fahrantriebs zwischen dem linken Griffabschnitt und dem Mittelgriffabschnitt und ein rechtes Bedienelement eines Fahrgebers zur Steuerung des Fahrantriebs zwischen dem rechten Griffabschnitt und dem Mittelgriffabschnitt angeordnet ist.

Bei Flurförderzeugen ist es bekannt, einen Lenkantrieb mittels eines als Lenkrades ausgebildeten Lenkers zu steuern. Bei Flurförderzeugen, die von einer in einem als Fahrerstand ausgebildete Fahrerarbeitsplatz befindlichen Bedienperson im Stehen bedient werden, ist es bekannt, an dem im Wesentlichen ringförmigen Lenkkranz des Lenkrades mindestens ein ringförmiges, drehbares Bedienelement anzuordnen, mit dem ein Fahrgeber zur Steuerung des Fahrantriebs des Flurförderzeugs betätigt werden kann. Das ringförmige Bedienelement kann von einer Bedienperson, die den Lenkkranz mit einer Hand umgreift, mittels des Daumens der den Lenkkranz des Lenkrades umgreifenden Hand betätigt werden, so dass von der Bedienperson mit der den Lenkkranz umgreifenden Hand gleichzeitig durch Drehen des Lenkrades gelenkt und durch Betätigen des ringförmigen Bedienelements der Fahrantrieb betätigt werden kann.

Aus der EP 2 383 164 A1 ist ein Lenkrad eines Fahrzeugs bekannt, bei dem elektrische Schalter, mit denen die Lenkung des Fahrzeugs betätigt werden kann, am Lenkkranz angeordnet sind. Die Schalter sind in Aussparungen des Lenkkranzes angeordnet.

Ein gattungsgemäßer als Lenkrad ausgebildeter Lenker für ein als Kommissionierer ausgebildetes Flurförderzeug ist aus der EP 1 155 939 B1 bekannt.

Das Lenkrad der EP 1 155 939 B1 besteht aus einer von einem ersten Abschnitt gebildeten Lenkerkonsole, die um die Drehachse drehbar angeordnet ist. An dem ersten Abschnitt ist an einer rechten Seite an einem Ansatz ein rechter Griffabschnitt und an einer linken Seite an einem Ansatz ein linker Griffabschnitt angeformt. Die Griffabschnitte weisen freie Enden auf, die aufeinander zu laufen. Um einen Lenkkranz zu bilden, ist ein als dritter Griffabschnitt ausgebildeter Mittelgriffabschnitt vorgesehen, der mittels eines speichenförmigen Abschnitts, der sich vom Fahrerstand forterstreckt, an dem die Lenkerkonsole bildenden ersten Abschnitt angeformt ist. Der Mittelgriffabschnitt erstreckt sich mit seinen beiden Enden zu den Enden des linken Griffabschnitts und des rechten Griffabschnitts. Die Enden des Mittelgriffabschnitts, des linken Griffabschnitts und des rechten Griffabschnitts sind voneinander beabstandet. An dem freien Ende des linken Griffabschnitts ist ein linkes Bedienelement angeordnet, mit dem ein Fahrgeber zur Steuerung des Fahrantriebs des Flurförderzeugs gesteuert werden kann. Entsprechend ist an dem freien Ende des rechten Griffabschnitts ein rechtes Bedienelement angeordnet, mit dem ein weiterer Fahrgeber zur Steuerung des Fahrantriebs des Flurförderzeugs gesteuert werden kann.

Ein gattungsgemäßes Lenkrad, dessen Lenkkranz aus einem linken Griffabschnitt, einem rechten Griffabschnitt und einem zwischen den beiden Griffabschnitten angeordneten Mittelgriffabschnitt besteht, ermöglicht mehrere Griff- und Bedienpositionen. Für die Vorwärtsfahrt und/oder die Rückwärtsfahrt des Flurförderzeugs kann die Bedienperson in einer normalen Griffposition mit der linken Hand den linken Griffabschnitt umgreifen und mit dem Daumen der linken Hand das linke Bedienelement des Fahrantriebs betätigen und/oder mit der rechten Hand den rechten Griffabschnitt umgreifen und mit dem Daumen der rechten Hand das rechte Bedienelement des Fahrantriebs betätigen. Für die Rückwärtsfahrt ist mit einem derartigen Lenkrad eine verbesserte Ergonomie erzielbar, wenn in einer alternativen Griffposition die Bedienperson mit der linken Hand den Mittelgriffabschnitt umgreift und mit dem Daumen der linken Hand das rechte Bedienelement des Fahrantriebs betätigt oder mit der rechten Hand den Mittelgriffabschnitt umgreift und mit dem Daumen der rechten Hand das linke Bedienelement des Fahrantriebs betätigt.

Bei der EP 1 155 939 B1 ist nachteilig, dass der speichenförmige Abschnitt, der an den ersten Abschnitt angeformt ist und in den Mittelgriffabschnitt des Lenkkranzes übergeht, in der alternativen Griffposition, in der die Bedienperson mit der linken Hand den Mittelgriffabschnitt von Außen umgreift und mit dem Daumen der linken Hand das rechte Bedienelement des Fahrantriebs betätigt oder mit der rechten Hand den Mittelgriffabschnitt von Außen umgreift und mit dem Daumen der rechten Hand das linke Bedienelement des Fahrantriebs betätigt, zu einer ungünstigen Ergonomie führt, da der speichenförmige Abschnitt das Umgreifen des Mittelgriffabschnitts mit der linken bzw. rechten Hand behindert.

Der vorliegenden Erfindung liegt die Aufgabe zugrunde, einen Lenker für ein Flurförderzeug zur Verfügung zu stellen, daer eine verbesserte Bedienung des Flurförderzeugs mit einer günstigen Ergonomie ermöglicht.

Diese Aufgabe wird erfindungsgemäß dadurch gelöst, dass der Lenkkranz ein in Umfangsrichtung des Lenkkranzes geschlossenes Rohr als tragende Struktur aufweist, wobei das Rohr im Bereich der Bedienelemente mit jeweils einer Aussparung in einer Rohrwand des Rohrs versehen ist, wobei der von dem Bedienelement betätigte Fahrgeber innerhalb des Rohrs in das hohle Rohrinnere des Rohres im Bereich der Aussparung eingebaut ist. Erfindungsgemäß weist somit der Lenkkranz des Lenkrades als tragende Struktur ein Rohr auf, das in Umfangsrichtung des Lenkkranzes geschlossen ausgebildet ist. Im Bereich des linken Bedienelements und des rechten Bedienelements ist das Rohr mit jeweils einer Aussparung in der Rohrwand versehen. Die von den beiden Bedienelementen betätigten Fahrgeber sind im Bereich der entsprechenden Aussparung innerhalb des Rohres und somit in das hohle Rohrinnere des Rohres eingebaut. Ein wesentlicher Vorteil des erfindungsgemäßen Lenkrades besteht darin, dass der linke Griffabschnitt, der rechte Griffabschnitt und der Mittelgriffschnitt als gemeinsame tragende Struktur das Rohr aufweisen. Bei dem erfindungsgemäßen Lenkrad ist somit für den Mittelgriffabschnitt kein speichenförmiger Abschnitt erforderlich, um den zwischen dem linken und dem rechten Griffabschnitten angeordneten Mittelgriffabschnitt zu halten. Durch den Entfall eines speichenförmigen Abschnitts für den Mittelgriffabschnitt kann die Bedienperson in einer alternativen Griffposition mit der rechten oder der linken Hand den Mittelgriffabschnitt sicher umfassen und umgreifen, so dass das erfindungsgemäße Lenkrad in der alternativen Griffposition, in der die Bedienperson mit der linken Hand den Mittelgriffabschnitt von Außen umgreift und mit dem Daumen der linken Hand das rechte Bedienelement des Fahrantriebs betätigt oder mit der rechten Hand den Mittelgriffabschnitt von Außen umgreift und mit dem Daumen der rechten Hand das linke Bedienelement des Fahrantriebs betätigt, eine günstigen Ergonomie aufweist und eine verbesserte Bedienung des Flurförderzeugs ermöglicht. Weiterhin ermöglicht ein Rohr als tragende Struktur des Lenkkranzes und somit als tragende Struktur des linken Griffabschnitts, des rechten Griffabschnitts und des Mittelgriffabschnitts eine stabile Ausführung des Lenkkranzes, um die Kräfte aufzunehmen, die entstehen, wenn sich
die Bedienperson des Flurförderzeugs im Fahrbetrieb des Flurförderzeugs an dem linken Griffabschnitt, dem rechten Griffabschnitt bzw. dem Mittelgriffabschnitt festhält.

Gemäß einer vorteilhaften Ausführungsform der Erfindung ist das Rohr als Metallrohr ausgebildet. Hierdurch ergibt sich eine kostengünstige, einfach zu fertigende und stabile Ausführung der tragenden Struktur des Lenkkranzes. Ein Metallrohr kann auf einfache Weise in eine für den Lenkkranz gewünschte Form gebogen werden und ermöglicht es auf einfache Weise, hohe Kräfte aufnehmen, die entstehen, wenn sich die Bedienperson des Flurförderzeugs im Fahrbetrieb des Flurförderzeugs an dem linken Griffabschnitt, dem rechten Griffabschnitt bzw. dem Mittelgriffabschnitt festhält. Durch den Einbau der Fahrgeber in das Rohrinnere und somit den Rohrinnenraum eines als Metallrohr ausgebildetes Rohres ergeben sich weitere Vorteile, da hierdurch eine gute Abschirmung der Fahrgeben gegen elektrische und magnetische Felder erzielt wird.

Das Rohr weist gemäß einer vorteilhaften Ausgestaltungsform der Erfindung einen im Wesentlichen kreisförmigen Querschnitt auf. Hierdurch ist einerseits bei geringer Wandstärke des Rohrs eine hohe Stabilität des Lenkkranzes erzielbar und es ergeben sich andererseits ergonomische Vorteile, da ein kreisförmiger Querschnitt des Rohrs zu einer günstigen Ergonomie führt, wenn die Bedienperson den linken Griffabschnitt, den rechten Griffabschnitt oder den Mittelgriffabschnitt mit einer Hand umgreift.

Besondere Vorteile ergeben sich, wenn sich die Aussparung über höchstens 180° Grad des Umfangs des Querschnitts des Rohrs erstreckt. Hierdurch wird einerseits eine ausreichend große Öffnung in der Rohrwand des Rohrs erzielt, um den Fahrgeber in das Rohr einbauen zu können und andererseits bleibt genügend Wandstärke des Rohrs bestehen, um eine stabile Verbindung des Mittelgriffabschnitts mit dem linken Griffabschnitt und dem rechten Griffabschnitt zu erzielen.

Der Lenkkranz ist gemäß einer vorteilhaften Ausgestaltungsform der Erfindung von einem einteiligen Rohr gebildet.

Gemäß einer alternativen und ebenfalls vorteilhaften Ausgestaltungsform der Erfindung ist der Lenkkranz von einem mehrteiligen Rohr gebildet, das aus mehreren Rohrsegmenten besteht, die durch Schweißverbindungen miteinander verbunden sind.

Hierdurch können Vorteile hinsichtlich einer günstigen Herstellung des Rohrs als tragende Struktur des Lenkkranzes erzielt werden.

Gemäß einer vorteilhaften Ausgestaltungsform der Erfindung ist das mehrteilige Rohr aus einem ersten Rohrsegment, das den linken Griffabschnitt bildet, einem zweiten Rohrsegment, das den rechten Griffabschnitt bildet, einem dritten Rohrsegment, das den Mittelgriffabschnitt bildet, einem vierten Rohrsegment im Bereich des linken Bedienelements und einem fünften Rohrsegment im Bereich des rechten Bedienelements gebildet. Hierdurch ergeben sich fertigungstechnische Vorteile, da das vierte und fünfte Rohrsegment mit der Aussparung zum Einbau des entsprechenden Fahrgebers in das Rohrsegment versehen werden kann, bevor die Rohrsegmente zu dem Rohr zusammengeschweißt werden.

Weitere Vorteile sind erzielbar, wenn das vierte und fünfte Rohrsegment einen von dem ersten, dem zweiten und dem dritten Rohrsegment unterschiedlichen Durchmesser und/oder unterschiedliche Rohrwandstärke aufweisen. Das erste, das zweite und das dritte Rohrsegment können hinsichtlich des Durchmessers an die Ergonomie des linken Griffabschnitts, des rechten Griffabschnitts und des Mittelgriffabschnitts angepasst werden und hinsichtlich der Wandstärke auf die auftretenden Kräfte ausgelegt werden, mit denen sich die Bedienperson an dem Lenkkranz festhält. Das vierte Rohrsegment und das fünfte Rohrsegment können hinsichtlich des Durchmessers und der Wandstärke derart ausgelegt werden, um bei entsprechender Stabilität der Verbindung des Mittelgriffabschnitts mit dem linken Griffabschnitt und mit dem rechten Griffabschnitt einen erforderlichen Einbauraum für den jeweiligen Fahrgeber innerhalb dieser beiden Rohrsegmente zur Verfügung zu stellen.

Gemäß einer vorteilhaften Ausgestaltungsform der Erfindung sind das linke und das rechte Bedienelement jeweils aus zwei Halbschalen zusammengesetzt. Ein derartiges, aus zwei Halbschalen bestehendes Bedienelement kann auf einfache Weise um das Rohr montiert werden und an dem Lenkkranz befestigt werden.

Die Halbschalen des Bedienelements können durch eine Steckverbindung oder ClipsVerbindung miteinander verbunden werden. Eine dauerhaft sichere Befestigung der beiden Halbschalen eines Bedienelements ist erzielbar, wenn die Halbschalen eines Bedienelements durch eine Schraubverbindung miteinander verbindbar sind.

Der innerhalb des Rohrs eingebaute Fahrgeber, der von dem entsprechenden Bedienelement betätigt wird, kann als Potentiometer oder als Hall-Sensor ausgebildet sein.

Zweckmäßigerweise ist das Rohr gemäß einer vorteilhaften Ausführungsform der Erfindung im Bereich des linken Griffabschnitts, des rechten Griffabschnitts und des Mittelgriffabschnitts mit Kunststoff umspritzt. Hierdurch können auf einfache Weise an dem Rohr, das die tragende Struktur des Lenkkranzes bildet, der linke Griffabschnitt, der rechte Griffabschnitt und der Mittelgriffabschnitt hergestellt werden.

Gemäß einer Weiterbildung sind die beiden Halbschalen der Bedienelements als Plastikteile ausgebildet und mit Abschirmelementen, insbesondere metallischen Abschirmplatten, zur Abschirmung der in das Rohrinnere eingebauten Fahrgeber gegen elektrische und magnetische Störfelder versehen. Hierdurch wird eine besonders wirksame Abschirmung der in das Rohrinnere eingebauten Fahrgeber gegen elektrische und magnetische Störfelder erzielt. Die Abschirmelemente können in den als Plastikteilen ausgebildeten Halbschalen durch Umspritzen mit dem Kunststoff bei der Herstellung der Halbschalen eingebettet werden oder an den Halbschalen in geeigneter Weise befestigt werden, beispielsweise durch Schraubverbindungen oder Klebeverbindungen.

Weitere Vorteile und Einzelheiten der Erfindung werden anhand der in den schematischen Figuren dargestellten Ausführungsbeispiele näher erläutert. Hierbei zeigt
- Figur 1: ein Flurförderzeug mit einem erfindungsgemäßem Lenkrad in einer perspektivischen Darstellung,
- Figur 2: das erfindungsgemäße Lenkrad in einer Ansicht auf die Vorderseite,
- Figur 3: das erfindungsgemäße Lenkrad in einer Seitenansicht,
- Figur 4: eine perspektivische Ansicht des erfindungsgemäßen Lenkrads,
- Figur 5: eine weitere perspektivische Ansicht des erfindungsgemäßen Lenkrads,
- Figur 6: die tragende Struktur des erfindungsgemäßen Lenkrades in einer perspektivischen Darstellung,
- Figur 7: die Figur 6 mit umspritzten Griffabschnitten und montierten Bedienelementen der Fahrgeber,
- Figur 8: einen Ausschnitt der tragenden Struktur des Lenkkranzes im Bereich der Bedienelemente der Fahrgeber mit einer ersten Ausführungsform der Aussparung,
- Figur 9: einen Ausschnitt der tragenden Struktur des Lenkkranzes im Bereich der Bedienelemente der Fahrgeber mit einer zweiten Ausführungsform der Aussparung,
- Figur 10: einen Ausschnitt der tragenden Struktur des Lenkkranzes im Bereich der Bedienelemente der Fahrgeber mit einem in das Rohr eingebautem Fahrgeber und
- Figur 11: ein Bedienelement mit einem Fahrgeber in einer vergrößerten Darstellung.

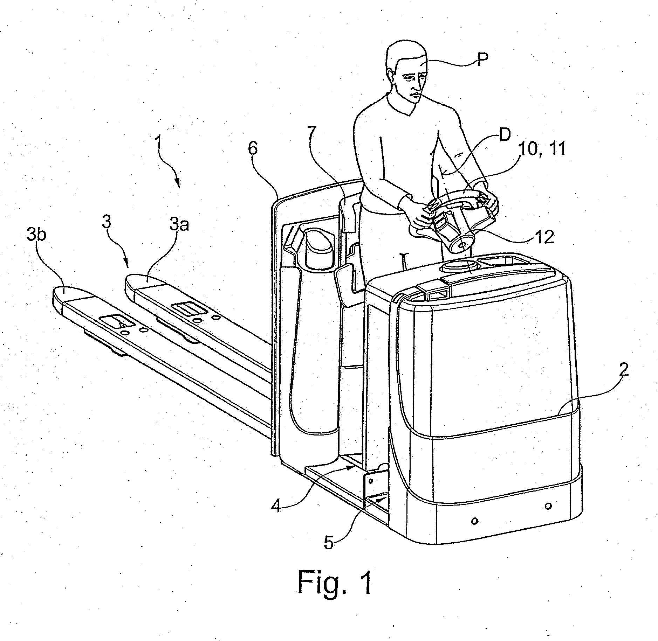

In der Figur 1 ist ein Flurförderzeug 1 mit einem erfindungsgemäßen als Lenkrad 11 ausgebildeten Lenker 10 dargestellt. Das im dargestellten Ausführungsbeispiel als Hubwagen oder Kommissionierer ausgebildete Flurförderzeug 1 weist einen Antriebsteil 2 und einen Lastteil 3 auf. Zwischen dem Antriebsteil 2 und dem Lastteil 3 ist ein Fahrerarbeitsplatz 4 für eine Bedienperson P angeordnet, der im dargestellten Ausführungsbeispiel als Fahrerstand für eine stehende Bedienperson P ausgebildet ist.

In dem Antriebsteil 2 ist ein lenkbares Antriebsrad angeordnet. Das Antriebsteil 2 ist weiterhin mit einem Batteriefach 5 für eine Traktionsbatterie versehen, die ein elektrisches Antriebssystem des Flurförderzeugs 1 mit elektrischer Energie versorgt.

Das Lastteil 3 besteht im dargestellten Ausführungsbeispiel aus zwei Lastarmen 3a, 3b, die mittels eines Hubantriebs relativ zu dem Antriebsteil 2 anhebbar und absenkbar sind. Der Hubantrieb ermöglicht einen Initialhub der beiden Lastarme 3a, 3b. Im dargestellten Ausführungsbeispiel ist der Fahrerarbeitsplatz 4 in dem dem Lastteil 3 zugewandten Bereich mit einer vertikalen Brüstungswand 6 versehen. An der Brüstungswand 6 kann eine Anlehnhilfe 7 für die stehende Bedienperson P angeordnet sein.

In der Figur 1 befindet sich die Bedienperson P in einer Stellung für die Vorwärtsfahrt, in der die Bedienperson P in Richtung des Antriebsteil 2 blickt.

Zur Bedienung des Flurförderzeugs 1 ist ein erfindungsgemäßer Lenker 10 vorgesehen, der im dargestellten Ausführungsbeispiel oberhalb des Antriebsteils 2 angeordnet ist.

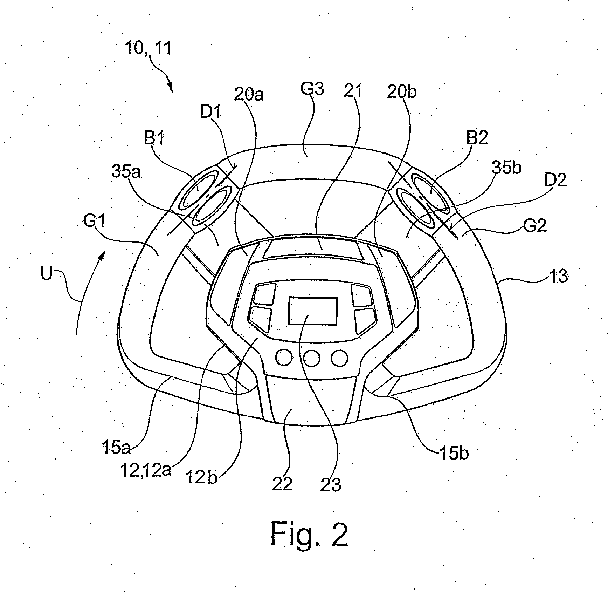

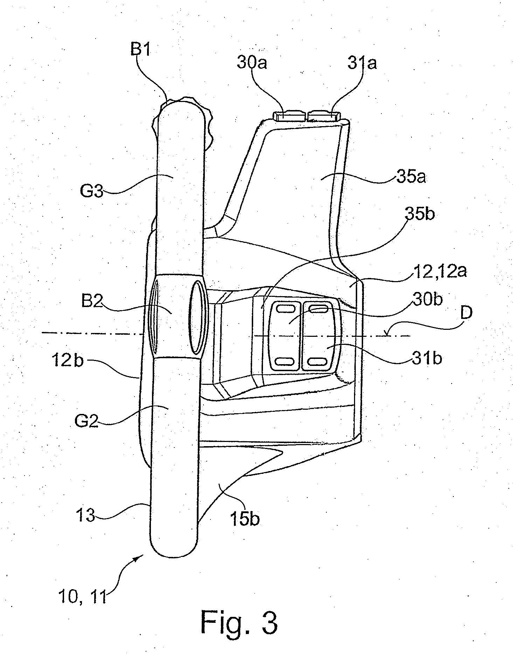

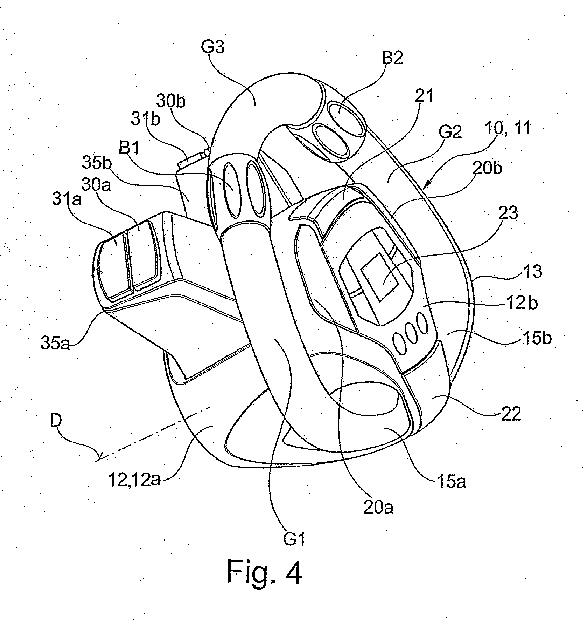

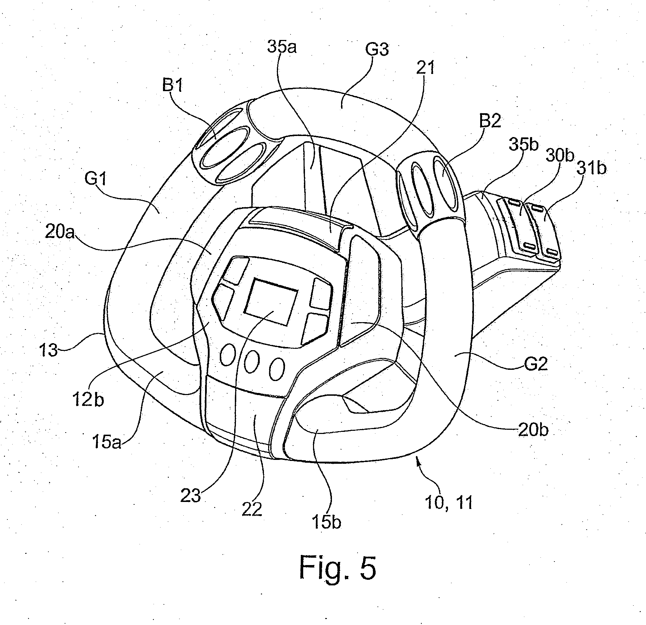

Der erfindungsgemäße Lenker 10 ist - wie in den Figuren 2 bis 5 näher ersichtlich ist - als Lenkrad 11 ausgebildet. Das Lenkrad 11 ist um eine Drehachse D drehbar an dem Flurförderzeug 1 angeordnet. Das Lenkrad 11 weist hierzu eine Lenkerkonsole 12 auf, mittels der das Lenkrad 11 um die Drehachse D drehbar an dem Flurförderzeugs 1 angeordnet ist. Das Lenkrad 11 weist einen Lenkkranz 13 auf. Der Lenkkranz 13 ist - in Umfangsrichtung U um die Drehachse D gesehen - als geschlossener Ring ausgebildet und weist - in der Vorderansicht der Figur 2 - eine im Wesentlichen trapezartige Gestalt mit abgerundeten Eckbereichen auf.

Mit dem Lenkrad 11 kann ein Lenkantrieb, beispielsweise ein elektrischer Lenkantrieb, des Antriebsrades gesteuert werden, wobei durch eine Drehbewegung des Lenkrades 11 und der Lenkerkonsole 12 um die Drehachse D ein Lenkgeber betätigt wird, der den Drehwinkel des Lenkrads 11 um die Drehachse D erfasst. Anhand des erfassten Drehwinkel des Lenkrads 11 wird der Lenkantrieb des Antriebsrades angesteuert.

Der Lenkkranz 13 besteht aus einem linken Griffabschnitt G1, einem rechten Griffabschnitt G2 und einem oberen Mittelgriffabschnitt G3 auf, der zwischen den beiden Griffabschnitten G1, G2 angeordnet ist. Der geschlossene Lenkkranz 13 ist von den beiden Griffabschnitten G1, G2 und dem Mittelgriffabschnitt G3 gebildet. Der linke Griffabschnitt G1 und der rechte Griffabschnitt G2 sind jeweils L-förmig ausgebildet und weisen untere Ansätze 15a, 15b auf, die sich zu der drehbaren Lenkerkonsole 12 erstrecken. Die beiden Griffabschnitte G1, G2 sind aufeinander zugeneigt angeordnet und mittels des Mittelgriffabschnitts G3 verbunden.

Zur Steuerung des Fahrantriebs des Antriebsrades ist ein linkes Bedienelement B1, mit dem ein nicht näher dargestellter Fahrgeber betätigbar ist, zwischen dem linken Griffabschnitt G1 und dem Mittelgriffabschnitt G3 und ein rechtes Bedienelement B2, mit dem ein weiterer nicht näher dargestellter Fahrgeber betätigbar ist, zwischen dem rechten Griffabschnitt G2 und dem Mittelgriffabschnitt G3 angeordnet. Der Mittelgriffabschnitt G3 stellt somit den oberen Bereich des Lenkkranzes 13 zwischen den beiden Bedienelementen B1, B2 dar. Das rechte Bedienelement B2 befindet sich - bezogen auf die in den Figuren 2 bis 5 dargestellte Geradeausfahrtstellung des Lenkrades 11 - in der 2-Uhr Stellung des Lenkrades 11. Das linke Bedienelement B1 befindet sich - bezogen auf die in den Figuren 2 bis 5 dargestellte Geradeausfahrtstellung des Lenkrades 11 - in der 10-Uhr Stellung des Lenkrades 11. Der Mittelgriffabschnitt G3 befindet sich - bezogen auf die in den Figuren 2 bis 5 dargestellte Geradeausfahrtstellung des Lenkrades 11 - im Bereich um die 12-Uhr Stellung des Lenkrades 11.

Der linke Griffabschnitt G1, der rechte Griffabschnitt G2 und der Mittelgriffabschnitt G3 sind jeweils im Querschnitt rund.

Die Bedienelemente B1, B2 zur Steuerung des Fahrantriebs des Flurförderzeugs, die jeweils einen entsprechenden Fahrgeber betätigen, sind jeweils an dem Lenkkranz 13 angeordnet und als ringartige, um eine Drehachse D1, D2 drehbare Bedienelemente B1, B2 ausgebildet. Die Drehachse D1, D2 der Bedienelemente B1, B2 entspricht der Längsachse des Lenkkranzes 13 im Bereich der Bedienelemente B1, B2, so dass die Bedienelemente B1, B2 um den Lenkkranz 13 gedreht werden können. Die Bedienelemente B1, B2 können von der Bedienperson P, die den Lenkkranz 13 mit der linken Hand bzw. der rechten Hand oder mit beiden Händen umgreift, mittels des Daumens der den Lenkkranz 13 umgreifenden Hand betätigt werden. Die Bedienelemente B1, B2 können hierzu mit entsprechenden Griffmulden versehen sein, in die der Daumen der entsprechenden Hand eingelegt werden kann.

In der dem Fahrerarbeitsplatz 4 zugewandten Vorderseite der Lenkerkonsole 12 können weitere Bedienelemente angeordnet sein, beispielsweise als Heben- und Senkenschalter ausgebildete Bedienelemente 20a, 20b zur Steuerung eines Hubantriebs des Flurförderzeugs 1. Im dargestellten Ausführungsbeispiel sind an der dem Fahrerarbeitsplatz 4 zugewandten Vorderseite der Lenkerkonsole 12 weiterhin ein Bedienelement 21 für ein Signalhorn und ein Bedienelement 22 eines Not-Aus-Schalters angeordnet. Darüber hinaus ist in dem dargestellten Ausführungsbeispiel in der dem Fahrerarbeitsplatz 4 zugewandten Vorderseite der Lenkerkonsole 12 ein Display 23 angeordnet.

An der drehbaren Lenkerkonsole 12 können an der dem Fahrerarbeitsplatz 4 abgewandten Rückseite des Lenkrades 11 mit Abstand von dem Lenkkranz 13 in Längsrichtung der Drehachse D der Lenkerkonsole 12 zumindest ein Zusatzbedienelement 30a, 30b, 31a, 31b angeordnet sein.

Im dargestellten Ausführungsbeispiel sind dem linken Bedienelement B1 und dem rechten Bedienelement B2 jeweils mindestens ein Zusatzbedienelement, im vorliegenden Ausführungsbeispiel jeweils zwei Zusatzbedienelemente 30a, 31a, 30b, 31b, zugeordnet. Die Zusatzbedienelemente 30a, 31a sind hierbei mit Abstand hinter dem Bedienelement B1 und die Zusatzbedienelemente 30b, 31b mit Abstand hinter dem Bedienelement B2 an der drehbaren Lenkerkonsole 12 angeordnet.

Für die Anordnung der Zusatzbedienelemente 30a, 31a mit Abstand von dem Lenkkranz 13 und somit hinter dem Bedienelement B1 ist an der Lenkerkonsole 12 ein Träger 35a angeordnet, der sich an der Lenkerkonsole 12 speichenartig nach radial Außen in den Bereich des Lenkkranzes 13 erstreckt. Die Zusatzbedienelemente 30a, 31a sind an der radial äußeren Stirnseite des Trägers 35a angeordnet. Entsprechend ist für die Anordnung der Zusatzbedienelemente 30b, 31b mit Abstand von dem Lenkkranz 13 und somit hinter dem Bedienelement B2 an der Lenkerkonsole 12 ein Träger 35b angeordnet, der sich an der Lenkerkonsole 12 speichenartig nach radial Außen in den Bereich des Lenkkranzes 13 erstreckt. Die Zusatzbedienelemente 30b, 31b sind an der radial äußeren Stirnseite des Trägers 35b angeordnet.

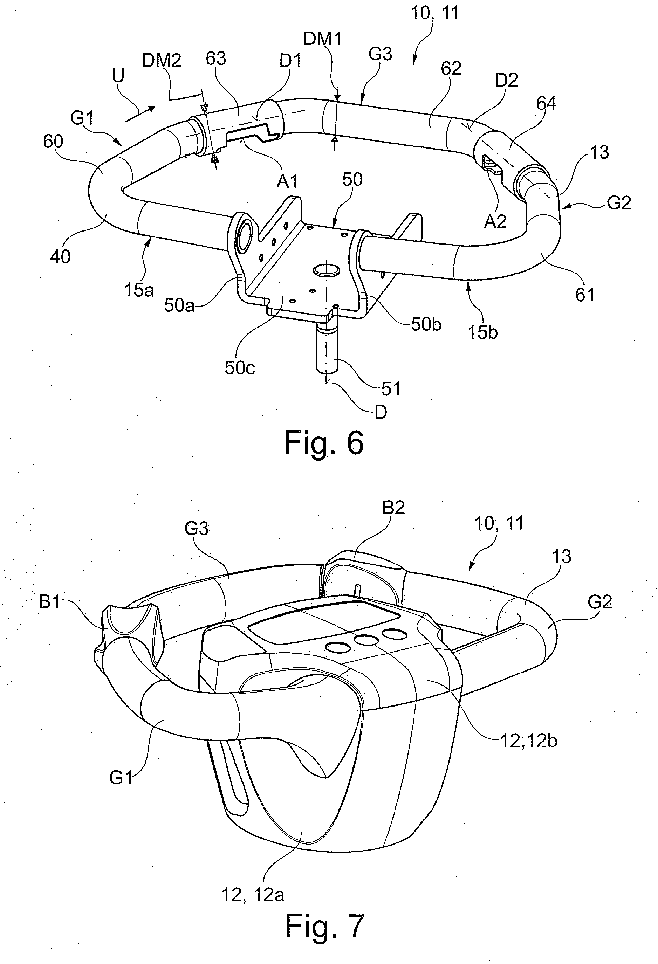

Bei dem erfindungsgemäßen Lenkrad 11 ist der Lenkkranz 13 - wie in Verbindung mit den Figuren 6 näher ersichtlich ist - als Rohr 40 ausgebildet, das in Umfangsrichtung U des Lenkkranzes 13 geschlossen und somit ohne Unterbrechung ist. Der Lenkkranz 13 weist somit als tragende Struktur das in Umfangsrichtung U des Lenkkranzes 13 geschlossene Rohr 40 auf. Um die von den Bedienelementen B1, B2 betätigten Fahrgeber F1, F2 aufzunehmen, ist das Rohr 40 im Bereich der Bedienelemente B1, B2 mit jeweils einer Aussparung A1, A2 in der Rohrwand des Rohrs 40 versehen.

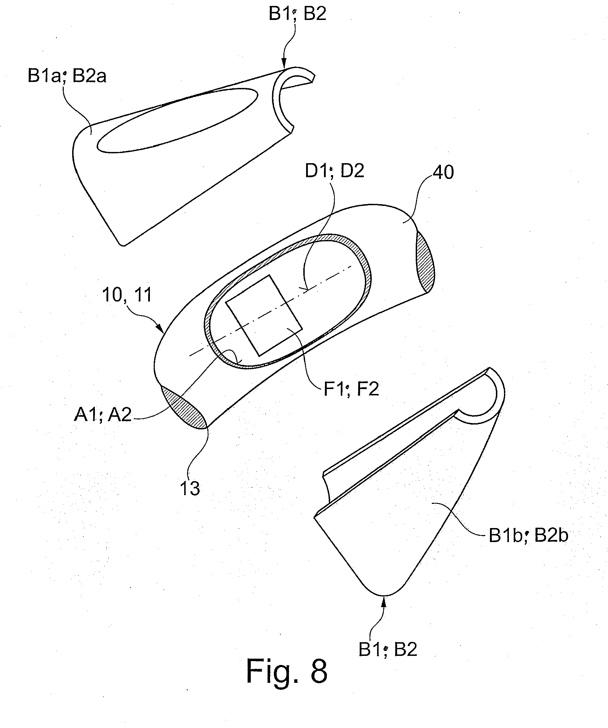

Wie aus der Figur 8 ersichtlich ist, in der ein Ausschnitt des Rohrs 40 im Bereich der Bedienelemente B1, B2 dargestellt ist, der mit der Aussparung A1, A2 in der Rohrwand versehen ist, dient die Aussparung A1, A2 dazu, den jeweiligen Fahrgeber F1, F2 innerhalb des Rohres 40 einzubauen, der von dem entsprechenden Bedienelement B1, B2 durch Drehen um die Drehachse D1, D2 betätigt wird.

Um nach dem Einbau des entsprechenden Fahrgebers F1, F2 in das Innere des Rohres 40 das jeweilige Bedienelement B1, B2 um den Lenkkranz 13 montieren zu können, besteht jedes Bedienelement B1, B2 aus zwei Halbschalen B1a, B1b bzw. B2a, B2b, die zusammengesetzt werden können. Das Bedienelement B1 bzw. B2 ist bezüglich der Drehachse D1, D2 in die entsprechenden Halbschalen B1a, B1b bzw. B2a, B2b unterteilt, so dass die beiden Halbschalen eines Bedienelements B1 bzw.B2 jeweils eine obere Halbschale und eine untere Halbschale bilden.

Das Rohr 40 ist bevorzugt als Metallrohr ausgebildet. Das Rohr 40 weist weiterhin im Querschnitt gesehen, d.h. in einer Ebene senkrecht zur Umfangsrichtung U des Lenkkranzes 13, einen im Wesentlichen kreisförmigen Querschnitt auf.

Die Aussparung A1 bzw. A2 in der Rohrwand des Rohres 40 erstreckt sich bevorzugt über höchstens 180° Grad des Umfangs des Querschnitts des Rohres 40.

Die Aussparungen A1, A2 in dem Rohr 40 sind in dem dargestellten Ausführungsbeispiel auf der dem Fahrerarbeitsplatz 4 abgewandten Rückseite des Lenkkranzes 13 angeordnet.

Das Rohr 40, das die tragende Struktur des Lenkkranzes 13 und somit die tragende Struktur für den linken Griffabschnitt G1, den rechten Griffabschnitt G2 und den Mittelgriffabschnitt G3 bildet, ist an einem Träger 50 befestigt. Der Träger 50 bildet die tragende Struktur für die Lenkerkonsole 12. Der Träger 50 ist im dargestellten Ausführungsbeispiel als U-förmige Platte 50c gebildet und weist zwei seitliche Flansche 50a, 50b auf, an denen das Rohr 40 mit den beiden Enden befestigt ist. Der Träger 50 ist bevorzugt als Metallplatte ausgebildet, an denen das Rohr 40 mit den beiden Enden verschweißt ist. Die Verbindung der Enden des Rohres 40 mit dem Träger 50 ist derart ausgeführt, dass die Rohrenden des Rohres 40 offen blieben, so dass eine Kabeldurchführung erzielt wird, die es ermöglich, die mit den Fahrgebern F1, F2 verbundenen Kabel über das Rohrinnere des Rohres 40 an den Träger 50 und somit in den Bereich der Drehachse D zu führen. An der Platte 50c ist ein Zapfen 51 ausgebildet, der die Drehachse D des Lenkers 10 und somit des Lenkrades 11 bildet.

Das den Lenkkranz 13 bildende Rohr 40 kann einteilig ausgebildet sein und entsprechend gebogen sein, um die Form des Lenkkranzes 13 mit dem linken Griffabschnitt G1, den rechten Griffabschnitt G2 und den Mittelgriffabschnitt G3 aufzuweisen.

In dem Ausführungsbeispiel der Figur 6 ist das den Lenkkranz 13 bildende Rohr 40 mehrteilig ausgebildet, das aus mehreren Rohrsegmenten 60-64 besteht, die durch Schweißverbindungen miteinander verbunden sind.

Das mehrteilige Rohr 40 gemäß der Figur 6 besteht aus einem ersten Rohrsegment 60, das den linken Griffabschnitt G1 bildet, einem zweiten Rohrsegment 61, das den rechten Griffabschnitt G2 bildet, einem dritten Rohrsegment 62, das den Mittelgriffabschnitt G3 bildet, einem vierten Rohrsegment 63 im Bereich des linken Bedienelements B1 des Fahrgebers F1 und einem fünften Rohrsegment 64 im Bereich des rechten Bedienelements B2 des Fahrgebers F2.

Das den linken Griffabschnitt G1 bildende Rohrsegment 60 ist an dem Träger 50 befestigt. Entsprechend ist das den rechten Griffabschnitt G2 bildende Rohrsegment 61 an dem Träger 50 befestigt. Das Rohrsegment 63 ist mit der Aussparung A1 für den Einbau des Fahrgebers F1 versehen, der von dem linken Bedienelement B1 betätigt ist. Das Rohrsegment 63 ist zwischen dem den linken Griffabschnitt G1 bildenden Rohrsegment 60 und dem den Mittelgriffabschnitt G3 bildenden Rohrsegment 62 angeordnet und mit den beiden Rohrsegmenten 60, 62 verschweißt. Das Rohrsegment 64 ist mit der Aussparung A2 für den Einbau des Fahrgebers F2 versehen, der von dem rechten Bedienelement B2 betätigt ist. Das Rohrsegment 64 ist zwischen dem den rechten Griffabschnitt G2 bildende Rohrsegment 61 und dem den Mittelgriffabschnitt G3 bildenden Rohrsegment 62 angeordnet und mit den beiden Rohrsegmenten 61, 62 verschweißt.

Die Rohrsegmente 60, 61, 62, die die entsprechenden Griffabschnitte G1, G2, G3 des Lenkkranzes 13 bilden, sind im dargestellten Ausführungsbeispiel als gebogene Rohre ausgeführt. Die beiden Rohrsegmente 63, 64, in die die von den Bedienelementen B1, B2 betätigten Fahrgebern F1, F2 eingebaut sind und die somit die Gehäuse für die von den Bedienelementen B1, B2 betätigten Fahrgebern F1, F2 bilden, sind im dargestellten Ausführungsbeispiel als gerade Rohre ausgebildet. Dies führt zu einer einfachen Herstellung des Rohres 40 als tragende Struktur für den Lenkkranz 13, da die Rohrsegmente 60, 61, 62 auf einfache Weise entsprechend gebogen werden können und die Rohrsegmente 63, 64 mit der entsprechenden Aussparung A1, A2 versehen werden können, bevor die Rohrsegmente 60-64 miteinander verschweißt werden.

Im dargestellten Ausführungsbeispiel weisen die Rohrsegmente 60, 61, 62, die die entsprechenden Griffabschnitte G1, G2, G3 des Lenkkranzes 13 bilden, den gleichen Durchmesser DM1 und die gleiche Wandstärke auf.

Die beiden Rohrsegmente 63, 64, die die Gehäuse für die von den Bedienelementen B1, B2 betätigten Fahrgebern F1, F2 bilden, weisen ebenfalls den gleichen Durchmesser DM2 und die gleiche Wandstärke auf.

Der Durchmesser DM2 der Rohrsegmente 63, 64 ist bevorzugt größer als der Durchmesser DM1 der Rohrsegmente 60, 61, 62. Die Wandstärke der Rohrsegmente 63, 64 ist bevorzugt kleiner als die Wandstärke der Rohrsegmente 60, 61, 62.

In der Figur 8, in der ein Ausschnitt des Rohrs 40 im Bereich eines der beiden Bedienelementen B1, B2 dargestellt ist, ist eine erste Ausführungsform der Aussparung A1 bzw. A2 dargestellt, die als langlochartige Ausnehmung in der Rohrwand des Rohrs 40 ausgebildet ist. Die langlochartige Ausnehmung erstreckt sich mit der Längserstreckung entlang der Drehachse D1 bzw. D2 des Bedienelements B1 bzw. B2.

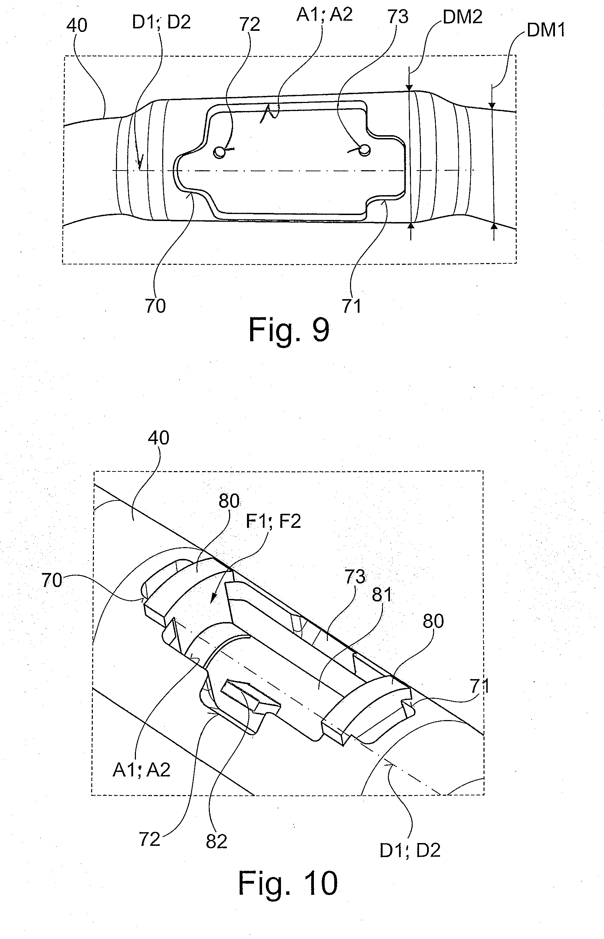

In der Figur 9, in der ein Ausschnitt des Rohrs 40 im Bereich eines der beiden Bedienelementen B1, B2 dargestellt ist, ist eine zweite Ausführungsform der Aussparung A1 bzw. A2 dargestellt, die als langlochartige Ausnehmung in der Rohrwand des Rohrs 40 ausgebildet ist. Die langlochartige Ausnehmung erstreckt sich mit der Längserstreckung entlang der Drehachse D1 bzw. D2 des Bedienelements B1 bzw. B2. An den beiden Enden ist die langlochartige Ausnehmung mit jeweils einer U-förmigen Erweiterung 70, 71 versehen. Das Rohr 40 kann an der der Aussparung A1, A2 gegenüberliegenden Seite mit Öffnungen 72, 73, beispielsweise Bohrungen, versehen sein. Die Öffnungen 72, 73 können dazu dienen, den Fahrgeber F1, F2 in dem Rohr 40 mittels Schrauben zu fixieren.

In der Figur 10, in der ein Ausschnitt des Rohrs 40 im Bereich eines der beiden Bedienelementen B1, B2 dargestellt ist, ist eine dritte Ausführungsform der Aussparung A1 bzw. A2 dargestellt, die als langlochartige Ausnehmung in der Rohrwand des Rohrs 40 ausgebildet ist. Die langlochartige Ausnehmung erstreckt sich mit der Längserstreckung entlang der Drehachse D1 bzw. D2 des Bedienelements B1 bzw. B2. An den beiden Enden ist die langlochartige Ausnehmung mit jeweils einer U-förmigen Erweiterung 70, 71 versehen. In der Figur 10 ist weiterhin der Fahrgeber F1 bzw. F2 in das Rohrinnere des Rohres 40 eingebaut. Der Fahrgeber F1 bzw. F2 ist beispielsweise als Potentiometer ausgebildet, der ein in einem Halter 80 um die Drehachse D1 bzw. D2 drehbar angeordnetes Bauteil 81 aufweist. Der Halter 80 stützt sich an den Seitenflächen der U-förmigen Erweiterungen 70, 71 ab, so dass die U-förmigen Erweiterung 70, 71 eine Verdrehsicherung für den Halter 80 des Fahrgebers F1 bzw. F2 bilden. Das drehbare Bauteil 81 des Fahrgebers F1 bzw. F2 ist zur Betätigung durch das entsprechende Bedienelement B1 bzw. B2 mit einem zapfenartigen Mitnehmer 82 versehen. Um einen entsprechenden Drehbereich um die Drehachse D1 bzw. D2 für den Mitnehmer 82 zur Verfügung zu stellen, ist in dem Ausführungsbeispiel der Figur 10 die als langlochartige Ausnehmung ausgebildete Aussparung A1 bzw. A2 auch an den beiden Seitenflächen im Bereich des Mitnehmers 82 mit jeweils einer U-förmigen Erweiterung 72, 73 versehen.

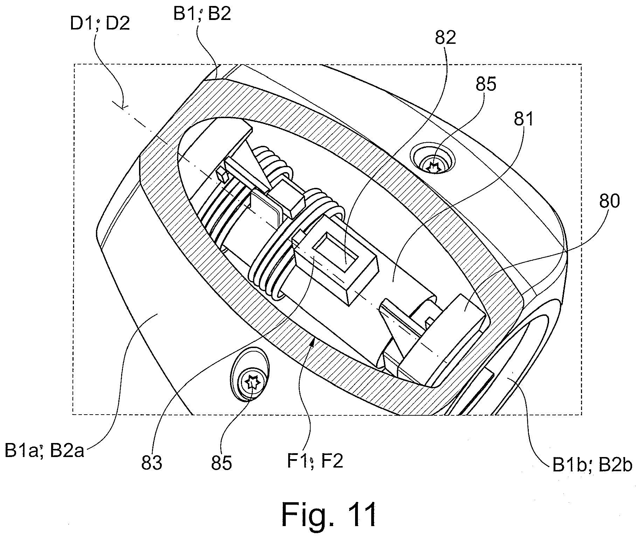

Wie aus der Figur 11 ersichtlich ist, in der eines der beiden Bedienelemente B1, B2 mit dem entsprechenden Fahrgeber F1, F2 dargestellt ist, ist eine Halbschale B1a bzw. B2a des entsprechenden Bedienelements B1 bzw. B2 mit einer Aufnahme 83 versehen, die mit dem Mitnehmer 82 des Fahrgebers F1 bzw. F2 in Wirkverbindung steht, so dass durch Drehen des Bedienelements B1 bzw. B2 um die Drehachse D1 bzw. D2 das drehbare Bauteil 81 des Fahrgebers F1 bzw. F2 entsprechend um die Drehachse D1 bzw. D2 betätigt wird.

In der Figur 11 ist weiterhin näher dargestellt, dass die beiden Halbschalen B1a, B1b bzw. B2a, B2b des entsprechenden Bedienelements B1 bzw. B2 durch eine Schraubverbindung 85 miteinander verbunden sind.

Wie aus der Figur 7 ersichtlich ist, wird das an dem Träger 50 befestigte Rohr 40 im Bereich der Griffabschnitte G1, G2, G3 mit Kunststoff umspritzt. Auch der Träger 50 wird mit Kunststoff umspritzt, um ein Gehäuse 12a der Lenkerkonsole 12 zu bilden. Auf das Gehäuse 12a der Lenkerkonsole 12 ist eine lösbare Abdeckung 12b der Lenkerkonsole 12 aufgesetzt, die die Vorderseite der Lenkerkonsole 12 bildet, in der die als Heben- und Senkenschalter ausgebildete Bedienelemente 20a, 20b zur Steuerung des Hubantriebs des Flurförderzeugs 1, das Bedienelement 21 für das Signalhorn, das Bedienelement 22 für den Not-Aus-Schalters und das Display 23 angeordnet werden können.

Die beiden Halbschalen B1a, B1b bzw. B2a, B2b des entsprechenden Bedienelements B1 bzw. B2, die bevorzugt als Plastikteile ausgebildet sind, können mit Abschirmelementen, beispielsweise metallischen Abschirmplatten, versehen sein, um die Abschirmung der in das Rohrinnere eingebauten Fahrgeber F1, F2 gegen elektrische und magnetische Störfelder zu erzielen. Die Abschirmelemente können in den als Plastikteilen ausgebildeten Halbschalen B1a, B1b bzw. B2a, B2b durch Umspritzen mit dem Kunststoff bei der Herstellung der Halbschalen B1a, B1b bzw. B2a, B2b eingebettet werden oder an den Halbschalen B1a, B1b bzw. B2a, B2b in geeigneter Weise befestigt werden, beispielsweise durch Schraubverbindungen oder Klebeverbindungen.

Bei dem erfindungsgemäßen Lenkrad 11 ist der Lenkkranz 13 von dem in Umfangsrichtung U des Lenkkranzes 13 geschlossenen Rohr 40 gebildet, wobei das Rohr 40 die tragende Struktur für den Lenkkranz 13 und somit für den linken Griffabschnitt G1, den rechten Griffabschnitt G2 und den Mittelgriffabschnitt G3 bildet. In das Rohrinnere des Rohres 40 sind die Fahrgeber F1, F2 eingebaut, so dass das Rohr 40 das Gehäuse für die Fahrgeber F1, F2 bildet, die von den beiden Bedienelementen B1, B2 betätigt werden. Bei der Ausführung des Rohres 40 als Metallrohr kann durch das Rohr 40 eine gute Abschirmung der in das Rohr 40 eingebauten Fahrgeber F1, F3 gegen elektrische und magnetische Felder erzielt werden. Die Ausführung der tragenden Struktur des Lenkkranzes 13 von dem in Umfangsrichtung U des Lenkkranzes 13 geschlossenen Rohr 40 führt dazu, dass der Lenkkranz 13 in Umfangsrichtung U gesehen als geschlossener Lenkkranz 13 ausgebildet ist, so dass der Mittelgriffabschnitt G3 an dem Rohr 40 ausgebildet ist und somit der Mittelgriffabschnitt G3 mit dem linken Griffabschnitt G1 und mit dem rechten Griffabschnitt G2 verbunden ist und der Mittelgriffabschnitt G3 an dem linken Griffabschnitt G1 und an dem rechten Griffabschnitt G2 gehalten ist, so dass für die Halterung des Mittelgriffabschnitts G3 kein speichenförmiger Abschnitt zu der Lenkerkonsole 12 erforderlich ist. Eine Bedienperson P kann daher in einer alternativen Griffposition mit der rechten oder der linken Hand den Mittelgriffabschnitt G3 sicher umfassen und umgreifen, so dass das erfindungsgemäße Lenkrad 11 in der alternativen Griffposition, in der die Bedienperson mit der linken Hand den Mittelgriffabschnitt G3 von Außen umgreift und mit dem Daumen der linken Hand das rechte Bedienelement B2 des Fahrantriebs F2 betätigt oder mit der rechten Hand den Mittelgriffabschnitt G3 von Außen umgreift und mit dem Daumen der rechten Hand das linke Bedienelement B1 des Fahrantriebs F1 betätigt, eine günstigen Ergonomie aufweist und eine verbesserte Bedienung des Flurförderzeugs 1 ermöglicht.

## Patentansprüche

1. Lenker (10) eines einen Fahrerarbeitsplatz (4), insbesondere Fahrerstand, aufweisenden Flurförderzeugs (1), wobei der Lenker (10) als Lenkrad (11) ausgebildet ist, das einen Lenkkranz (13) aufweist, und um eine Drehachse (D) drehbar angeordnet ist, wobei der Lenkkranz (13) einen linken Griffabschnitt (G1), einen rechten Griffabschnitt (G2) und einen zwischen den beiden Griffabschnitten (G1; G2) angeordneten Mittelgriffabschnitt (G3) aufweist, wobei ein linkes Bedienelement (B1) eines Fahrgebers (F1) zur Steuerung des Fahrantriebs zwischen dem linken Griffabschnitt (G1) und dem Mittelgriffabschnitt (G3) und ein rechtes Bedienelement (B2) eines Fahrgebers (F2) zur Steuerung des Fahrantriebs zwischen dem rechten Griffabschnitt (G2) und dem Mittelgriffabschnitt (G3) angeordnet ist, **dadurch gekennzeichnet, dass** der Lenkkranz (13) ein in Umfangsrichtung (U) des Lenkkranzes (13) geschlossenes Rohr (40) als tragende Struktur aufweist, wobei das Rohr (40) im Bereich der Bedienelemente (B1; B2) mit jeweils einer Aussparung (A1; A2) in einer Rohrwand des Rohrs (40) versehen ist, wobei der von dem Bedienelement (B1; B2) betätigte Fahrgeber (F1; F2) innerhalb des Rohrs (40) in das hohle Rohrinnere des Rohres (40) im Bereich der Aussparung (A1; A2) eingebaut ist.

2. Lenker nach Anspruch 1, **dadurch gekennzeichnet, dass** das Rohr (40) als Metallrohr ausgebildet ist.

3. Lenker nach Anspruch 1 oder 2, **dadurch gekennzeichnet, dass** das Rohr (40) einen im Wesentlichen kreisförmigen Querschnitt aufweist.

4. Lenker nach einem der Ansprüche 1 bis 3, **dadurch gekennzeichnet, dass** sich die Aussparung (A1; A2) über höchstens 180° Grad des Umfangs des Querschnitts des Rohr (40) erstreckt.

5. Lenker nach einem der Ansprüche 1 bis 4, **dadurch gekennzeichnet, dass** der Lenkkranz (13) von einem einteiligen Rohr (40) gebildet ist.

6. Lenker nach einem der Ansprüche 1 bis 4, **dadurch gekennzeichnet, dass** der Lenkkranz (13) von einem mehrteiligen Rohr (40) gebildet ist, das aus mehreren Rohrsegmenten (60-64) besteht, die durch Schweißverbindungen miteinander verbunden sind.

7. Lenker nach Anspruch 6, **dadurch gekennzeichnet, dass** das mehrteilige Rohr (40) aus einem ersten Rohrsegment (60), das den linken Griffabschnitt (G1) bildet, einem zweiten Rohrsegment (61), das den rechten Griffabschnitt (G2) bildet, einem dritten Rohrsegment (62), das den Mittelgriffabschnitt (G3) bildet, einem vierten Rohrsegment (63) im Bereich des linken Bedienelements (B1) und einem fünften Rohrsegment (64) im Bereich des rechten Bedienelements (B2) gebildet ist.

8. Lenker nach Anspruch 7, **dadurch gekennzeichnet, dass** das vierte Rohrsegment (63) und fünfte Rohrsegment (64) einen von dem ersten, dem zweiten und dem dritten Rohrsegment (60-62) unterschiedlichen Durchmesser (DM1; DM2) und/oder unterschiedliche Rohrwandstärke aufweisen.

9. Lenker nach einem der Ansprüche 1 bis 8, **dadurch gekennzeichnet, dass** das linke und das rechte Bedienelement (B1; B2) jeweils aus zwei Halbschalen (B1a, B1b; B2a, B2b) zusammengesetzt sind.

10. Lenker nach Anspruch 9, **dadurch gekennzeichnet, dass** die Halbschalen (B1a, B1b; B2a, B2b) eines Bedienelements (B1; B2) durch eine Schraubverbindung miteinander verbindbar sind.

11. Lenker nach einem der Ansprüche 1 bis 10, **dadurch gekennzeichnet, dass** der Fahrgeber (F1; F2) als Potentiometer oder als Hall-Sensor ausgebildet ist.

12. Lenker nach einem der Ansprüche 1 bis 11, **dadurch gekennzeichnet, dass** das Rohr (40) im Bereich des linken Griffabschnitts (G1), des rechten Griffabschnitts (G2) und des Mittelgriffabschnitts (G3) mit Kunststoff umspritzt ist.

13. Lenker nach einem der Ansprüche 9 bis 12, **dadurch gekennzeichnet, dass** die beiden Halbschalen (B1a, B1b; B2a, B2b) der Bedienelements (B1; B2) als Plastikteile ausgebildet sind und mit Abschirmelementen, insbesondere metallischen Abschirmplatten, zur Abschirmung der in das Rohrinnere eingebauten Fahrgeber (F1, F2) gegen elektrische und magnetische Störfelder versehen sind.

## Claims

1. Steering element (10) of an industrial truck (1) having a driver's workstation (4), in particular a driver's stand, wherein the steering element (10) is configured as a steering wheel (11) which has a steering wheel rim (13) and is arranged so as to be rotatable about a rotational axis (D), wherein the steering wheel rim (13) has a left-hand grip section (G1), a right-hand grip section (G2) and a central grip section (G3) which is arranged between the two grip sections (G1; G2), wherein a left-hand operator control element (B1) of an accelerator (F1) for controlling the drive is arranged between the left-hand grip section (G1) and the central grip section (G3), and a right-hand operator control element (B2) of an accelerator (F2) for controlling the drive is arranged between the right-hand grip section (G2) and the central grip section (G3), **characterized in that** the steering wheel rim (13) has a tube (40), as a supporting structure, which is closed in the circumferential direction (U) of the steering wheel rim (13), wherein the tube (40) is provided in the region of the operator control elements (B1; B2) with, in each case, one recess (A1; A2) in a tubular wall of the tube (40), wherein the accelerator (F1; F2), which is activated by the operator control element (B1; B2), within the tube (40) is installed in the hollow tube interior of the tube (40), in the region of the recess (A1; A2).

2. Steering element according to Claim 1, **characterized in that** the tube (40) is configured as a metal tube.

3. Steering element according to Claim 1 or 2, **characterized in that** the tube (40) has an essentially circular cross section.

4. Steering element according to one of Claims 1 to 3, **characterized in that** the recess (A1; A2) extends over a maximum of 180° of the circumference of the cross section of the tube (40).

5. Steering element according to one of Claims 1 to 4, **characterized in that** the steering wheel rim (13) is formed by a single-piece tube (40).

6. Steering element according to one of Claims 1 to 4, **characterized in that** the steering wheel rim (13) is formed by a multi-piece tube (40) which is composed of a plurality of tubular segments (60-64) which are connected to one another by means of welded connections.

7. Steering element according to Claim 6, **characterized in that** the multi-piece tube (40) is formed from a first tubular segment (60), which forms the left-hand grip section (G1), a second tubular segment (61), which forms the right-hand grip section (G2), a third tubular segment (62), which forms the central grip section (G3), a fourth tubular segment (63) in the region of the left-hand operator control element (B1), and a fifth tubular segment (64) in the region of the right-hand operator control element (B2).

8. Steering element according to Claim 7, **characterized in that** the fourth tubular segment (63) and the fifth tubular segment (64) have a diameter (DM1; DM2) which is different from the first, second and third tubular segments (60-62), and/or a different tubular wall thickness.

9. Steering element according to one of Claims 1 to 8, **characterized in that** the left-hand and the right-hand operator control elements (B1; B2) are each composed of two half-shells (B1a, B1b; B2a, B2b).

10. Steering element according to Claim 9, **characterized in that** the half-shells (B1a, B1b; B2a, B2b) of an operator control element (B1; B2) can be connected to one another by means of a screwed connection.

11. Steering element according to one of Claims 1 to 10, **characterized in that** the accelerator (F1; F2) is configured as a potentiometer or as a Hall sensor.

12. Steering element according to one of Claims 1 to 11, **characterized in that** the tube (40) is encapsulated by injection moulding with plastic in the region of the left-hand grip section (G1), of the right-hand grip section (G2) and of the central grip section (G3) .

13. Steering element according to one of Claims 9 to 12, **characterized in that** the two half-shells (B1a, B1b; B2a, B2b) of the operator control elements (B1; B2) are configured as plastic parts and are provided with screening elements, in particular metallic screening panels, for screening the accelerators (F1, F2), installed in the tube interior, against electrical and magnetic interference fields.

## Revendications

1. Volant (10) d'un chariot de manutention (1) présentant un poste de conducteur (4), en particulier une plate-forme de conducteur, dans lequel le volant (10) est constitué par un volant de direction (11), qui présente une couronne de direction (13), et est disposé de façon rotative autour d'un axe de rotation (D), dans lequel la couronne de direction (13) présente une partie de poignée gauche (G1), une partie de poignée droite (G2) et une partie de poignée médiane (G3) disposée entre les deux parties de poignée (G1; G2), dans lequel un élément de commande gauche (B1) d'un organe de conduite (F1) pour la commande de l'entraînement de roulage est disposé entre la partie de poignée gauche (G1) et la partie de poignée médiane (G3) et un élément de commande droit (B2) d'un organe de conduite (F2) pour la commande de l'entraînement de roulage est disposé entre la partie de poignée droite (G2) et la partie de poignée médiane (G3), **caractérisé en ce que** la couronne de direction (13) présente un tube (40) fermé dans la direction périphérique (U) de la couronne de direction (13) comme structure portante, dans lequel le tube (40) est muni dans la région des éléments de commande (B1; B2) respectivement d'une découpe (A1; A2) dans une paroi de tube du tube (40), dans lequel l'organe de conduite (F1; F2) actionné par l'élément de commande (B1; B2) est placé à l'intérieur du tube (40) dans l'intérieur tubulaire creux du tube (40) dans la région de la découpe (A1; A2).

2. Volant selon la revendication 1, **caractérisé en ce que** le tube (40) est constitué par un tube métallique.

3. Volant selon la revendication 1 ou 2, **caractérisé en ce que** le tube (40) présente une section transversale essentiellement circulaire.

4. Volant selon l'une quelconque des revendications 1 à 3, **caractérisé en ce que** la découpe (A1; A2) s'étend au maximum sur 180° du pourtour de la section transversale du tube (40).

5. Volant selon l'une quelconque des revendications 1 à 4, **caractérisé en ce que** la couronne de direction (13) est formée d'un tube en une pièce (40).

6. Volant selon l'une quelconque des revendications 1 à 4, **caractérisé en ce que** la couronne de direction (13) est formée d'un tube en plusieurs parties (40), qui se compose de plusieurs segments de tube (60-64), qui sont assemblés les uns aux autres par l'intermédiaire d'assemblages soudés.

7. Volant selon la revendication 6, **caractérisé en ce que** le tube en plusieurs parties (40) est formé d'un premier segment de tube (60), qui forme la partie de poignée gauche (G1), d'un deuxième segment de tube (61), qui forme la partie de poignée droite (G2), d'un troisième segment de tube (62), qui forme la partie de poignée médiane (G3), d'un quatrième segment de tube (63) dans la région de l'élément de commande gauche (B1) et d'un cinquième segment de tube (64) dans la région de l'élément de commande droit (B2).

8. Volant selon la revendication 7, **caractérisé en ce que** le quatrième segment de tube (63) et le cinquième segment de tube (64) présentent un diamètre (DM1; DM2) et/ou une épaisseur de paroi de tube différent(e) du premier, du deuxième et du troisième segment de tube (60-62) .

9. Volant selon l'une quelconque des revendications 1 à 8, **caractérisé en ce que** l'élément de commande gauche et l'élément de commande droit (B1; B2) sont composés respectivement de deux demi-coques (B1a, B1b; B2a, B2b).

10. Volant selon la revendication 9, **caractérisé en ce que** les demi-coques (B1a, B1b; B2a, B2b) d'un élément de commande (B1; B2) peuvent être assemblées l'une à l'autre par un assemblage vissé.

11. Volant selon l'une quelconque des revendications 1 à 10, **caractérisé en ce que** l'organe de conduite (F1; F2) est réalisé sous la forme d'un potentiomètre ou d'un capteur de Hall.

12. Volant selon l'une quelconque des revendications 1 à 11, **caractérisé en ce que** le tube (40) est enrobé de matière synthétique dans la région de la partie de poignée gauche (G1), de la partie de poignée droite (G2) et de la partie de poignée médiane (G3).

13. Volant selon l'une quelconque des revendications 9 à 12, **caractérisé en ce que** les deux demi-coques (B1a, B1b; B2a, B2b) de l'élément de commande (B1; B2) sont constituées par des pièces en plastique et sont munies d'éléments de blindage, en particulier de plaques de blindage métalliques, pour la protection des organes de conduite (F1, F2) installés à l'intérieur du tube contre des champs perturbateurs électriques et magnétiques.
